(19) Europäisches Patentamt
European Patent Office
Office européen des brevets

(11) **EP 4 199 342 A1**

(12) **EUROPEAN PATENT APPLICATION**
published in accordance with Art. 153(4) EPC

(43) Date of publication:
**21.06.2023 Bulletin 2023/25**

(21) Application number: **20949974.8**

(22) Date of filing: **08.09.2020**

(51) International Patent Classification (IPC):
*H02P 25/04* (2006.01)     *H02P 25/16* (2006.01)
*H02M 5/22* (2006.01)     *H02M 5/293* (2006.01)

(52) Cooperative Patent Classification (CPC):
**H02M 5/22; H02M 5/293; H02P 25/04; H02P 25/16**

(86) International application number:
**PCT/CN2020/113872**

(87) International publication number:
**WO 2022/036769 (24.02.2022 Gazette 2022/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.08.2020 CN 202010830878**

(71) Applicant: **Kiwi Instruments Corporation (Xiamen)
Xiamen, Fujian 361000 (CN)**

(72) Inventors:
• **ZHOU, Zongjie**
  **Xiamen, Fujian 361000 (CN)**
• **YU, Huijie**
  **Xiamen, Fujian 361000 (CN)**
• **CAI, Kunming**
  **Xiamen, Fujian 361000 (CN)**

(74) Representative: **J A Kemp LLP
80 Turnmill Street
London EC1M 5QU (GB)**

(54) **ALTERNATING-CURRENT CHOPPER CIRCUIT AND SINGLE-PHASE ALTERNATING-CURRENT ELECTRIC MOTOR DRIVE SYSTEM**

(57)     Provided are an alternating-current chopper circuit and a single-phase alternating-current electric motor drive system. The alternating-current chopper circuit comprises a switch circuit, a synchronization signal generation circuit, a switch drive circuit and an auxiliary power source circuit, wherein an input end of the switch circuit is coupled to an alternating-current power source, an output end of the switch circuit drives an alternating-current load, and the switch drive circuit controls the switch circuit on the basis of an output signal of the synchronization signal generation circuit; and the auxiliary power source circuit generates, on the basis of a voltage signal on the switch circuit, an auxiliary power source voltage for supplying power to the switch drive circuit. The alternating-current chopper circuit and the single-phase alternating-current electric motor drive system provided in the present invention have simple structures and a higher efficiency, and also have higher power factors.

FIG. 2

## Description

TECHNICAL FIELD

The present application relates to electronic circuit field, and more particularly but not exclusively relates to a type of AC chopping circuit and single-phase AC motor driving system.

BACKGROUND

Single-phase motors generally refer to asynchronous motors which are supplied by single-phase AC (alternating current) power source provided by mains AC power. Since mains power supplies electricity very conveniently and cost-savingly for daily life, single-phase motors are not only widely used in industry but also highly related to civil daily life. With the developing civil life quality, the quantity of single-phase motors for housekeeping appliances such as electrical fans increases rapidly. A single-phase motor regulates its rotation speed by using a motor speed regulation circuit.

A first type of speed regulation method for a single-phase motor adopts an inductive mechanical switch to regulate rotation speed. By adjusting the inductance of an inductor connected in series, the inductive mechanical ratio between the auxiliary winding and the main winding is adjusted and thus the rotation speed is adjusted. However, this driving approach has limited regulation range of rotation speed, and cannot start or regulate at low speed.

A second type of speed regulation method for a single-phase motor adopts a reactance connected in series to perform stepless regulation of speed. This approach can realize a smooth speed regulation. However, the regulation range is also limited, the size of the reactance is too big, and the system efficiency is low.

A third type of method adopts a bidirectional thyristor to perform chopping control of voltage between terminals of a motor to realize speed regulation. This approach has wide usage for its low cost and simple structure. However, at low speed, the voltage has high distortion because its waveform is highly chopped, thus the power factor (PF) is low and may not meet the requirement for a power source. Further, this approach has high torque ripple and high noise.

A fourth type of method adopts an AC chopper, together with several electrically isolated auxiliary power sources, and many high voltage devices, for example, 8 high voltage diodes and 2 high voltage bidirectional switches which connect to separate grounds. Therefore, the circuit has a complicated design, wherein the high voltage devices are required to be electrically isolated from the control unit, and multiple power sources isolated from each other are required, so it is difficult to realize system integration. This approach has high system complexity and high cost. And thus this high-cost isolated driving and auxiliary power supply approach is difficult to be widely used in cost sensitive applications such as single-phase motor driving.

A fifth type of control method use a frequency conversion inverter to regulate the speed. This approach requires an AC-DC (alternating current to direct current) converter circuit for rectifying and filtering an AC power into a constant DC power and a chopper circuit for chopping a square waveform signal for frequency conversion. Although this approach can regulate the amplitude and frequency simultaneously for flexible application, it requires a large capacitor after an input rectification circuit or requires an AC-DC switching circuit to obtain a constant DC power, and further requires a complex frequency conversion inverter to provide a variable-frequency-AC voltage source. Accordingly, this approach has large size, high cost and complex system operation. Also, the power factor is low due to the existence of the input rectification filtering capacitor. For example, the half load power factor is usually between 0.5 to 0.6. Thus, an additional preliminary PFC (power factor correction) circuit is required to be added for the high-power inverter, which further adds on cost and power loss.

Yet another method adopts AC chopper having a rectifying bridge which rectifies the input AC power into half-wave rectified voltage, and then the rectified voltage is chopped by a bridge circuit with high frequency and folds the negative half cycle back. This kind of chopper can effectively overcome the shortcomings of a thyristor chopper and achieve low harmonic and low cost. But the rectifying bridge in this scheme needs to bear a large current, which brings a large conduction loss, increases the difficulty of heat dissipation, reduces the efficiency and increases the cost.

Accordingly, improved circuit topology or control method is required to address one or more deficiencies in the above approaches.

SUMMARY

in order to address one or more problems in the above approaches, the present application provides a type of AC chopping circuit and single-phase AC motor driving system.

According to one aspect of the present application, an AC chopping circuit comprises: switching circuit, having a first input terminal, a second input terminal, a first output terminal and a second output terminal, wherein the first input terminal is coupled with a first terminal of an AC power source, the second input terminal is coupled with a second terminal of the AC power source, the first output terminal is coupled with a first terminal of a load, and the second output terminal is coupled with a second terminal of the load; a synchronizing signal generating circuit, configured to provide a synchronizing signal which is related to polarity of the AC power source; a switch driving circuit, configured to control the switching circuit in accordance with the synchronizing signal; and an auxiliary power supplying circuit, coupled with the switching circuit, the auxiliary power supplying circuit generating an auxiliary power to supply the switch driving circuit based on voltage signal in the switching circuit.

In one embodiment, the switching circuit has a reference terminal coupled with the auxiliary power supplying circuit and the switch driving circuit, and the reference terminal functions as ground of the auxiliary power supplying circuit and ground of the switch driving circuit.

In one embodiment, the AC chopping circuit further comprises a first capacitor coupled between the first input terminal and the second input terminal of the switching circuit.

In one embodiment, the switching circuit comprising: a first switching transistor coupled between the first input terminal and the first output terminal of the switching circuit; a second switching transistor coupled between a reference terminal and the first output terminal of the switching circuit; a third switching transistor coupled between the second input terminal and the second output terminal of the switching circuit; and a fourth switching transistor coupled between the reference terminal and the second output terminal of the switching circuit.

In one embodiment, the switch driving circuit comprises: a first half-bridge driving circuit configured to drive the first switching transistor and the second switching transistor, wherein the first half-bridge driving circuit is able to turn on the first switching transistor and the second switching transistor simultaneously; and a second half-bridge driving circuit configured to drive the third switching transistor and the fourth switching transistor, wherein the second half-bridge driving circuit is able to turn on the third switching transistor and the fourth switching transistor simultaneously, and wherein the first half-bridge driving circuit and the second half-bridge driving circuit are non-isolated driving circuit.

In one embodiment, the first switching transistor has a first body diode coupled in parallel with the first switching transistor, and wherein anode of the first body diode is coupled with the first output terminal of the switching circuit, and cathode of the first body diode is coupled with the first input terminal of the switching circuit; the second switching transistor has a second body diode coupled in parallel with the second switching transistor, and wherein anode of the second body diode is coupled with the reference terminal of the switching circuit, and cathode of the second body diode is coupled with the first output terminal of the switching circuit; the third switching transistor comprises a third body diode coupled in parallel with the third switching transistor, and wherein anode of the third body diode is coupled with the second output terminal of the switching circuit, and cathode of the third body diode is coupled with the second input terminal of the switching circuit; and the fourth switching transistor comprises a fourth body diode coupled in parallel with the fourth switching transistor, and wherein anode of the fourth body diode is coupled with the reference terminal of the switching circuit, and cathode of the fourth body diode is coupled with the second output terminal of the switching circuit.

In one embodiment, the auxiliary power supplying circuit has an input, an output and a reference terminal, and wherein the input of the auxiliary power supplying circuit is coupled with either one of the first input terminal, the second input terminal, the first output terminal or the second output terminal of the switching circuit, the output of the auxiliary power supplying circuit is coupled with the switch driving circuit configured to provide power to the switch driving circuit and the synchronizing signal generating circuit, the reference terminal of the auxiliary power supplying circuit is coupled with the reference terminal of the switching circuit configured to form current loop among the input of the auxiliary power supplying circuit, the reference terminal of the auxiliary power supplying circuit and the switching circuit.

In one embodiment, the auxiliary power supplying circuit comprises: a fifth diode having an anode coupled with the first input terminal of the switching circuit, and/or a sixth diode having an anode coupled with the second input terminal of the switching circuit; and a voltage converting circuit having a first input terminal, a second input terminal and an output, wherein the first input terminal of the voltage converting circuit is coupled with a cathode of the fifth diode and/or to a cathode of the sixth diode, the second input terminal of the voltage converting circuit is coupled with the reference terminal of the switching circuit, and the output of the auxiliary power supplying circuit is configured to provide an auxiliary power.

In one embodiment, the auxiliary power supplying circuit comprises: a fifth diode having an anode coupled with the first output terminal of the switching circuit, and/or a sixth diode having an anode coupled with the second output terminal of the switching circuit; and a voltage converting circuit having a first input terminal, a second input terminal and an output, wherein the first input terminal of the voltage converting circuit is coupled with a cathode of the fifth diode and/or to a cathode of the sixth diode, the second input terminal of the voltage converting circuit is coupled with the reference terminal of the switching circuit, and the output of the auxiliary power supplying circuit is configured to provide an auxiliary power.

In one embodiment, the auxiliary power supplying circuit further comprises: a seventh diode having an anode coupled with the second input terminal of the voltage converting circuit, and a cathode coupled with the anode of the fifth diode; and/or an eighth diode having an anode coupled with the second input terminal of the voltage converting circuit, and a cathode coupled with the anode of the sixth diode.

In one embodiment, the auxiliary power supplying circuit further comprises a second capacitor coupled between the first input terminal and the second input terminal of the voltage converting circuit.

In one embodiment, the auxiliary power supplying circuit comprises: a first resistor having a first terminal coupled with the first input terminal of the switching circuit; a second resistor having a first terminal coupled with the second input terminal of the switching circuit, and a second terminal coupled with a second terminal of the first resistor; and a voltage converting circuit having a first input terminal, a second input terminal and an output, wherein the first input terminal of the voltage converting circuit is coupled with the second terminal of the first resistor, the second input terminal of the voltage converting circuit is coupled with the reference terminal of the auxiliary power supplying circuit, and the output of the voltage converting circuit is configured to provide an auxiliary power.

In one embodiment, when the synchronizing signal indicates a positive half cycle working zone, the voltage at the first input terminal of the switching circuit is less than the voltage at the second input terminal of the switching circuit, the switch driving circuit turns on the first switching transistor and the second switching transistor, controls the third switching transistor performing switching action with a duty cycle, and controls the fourth switching transistor working at rectification state; and when the synchronizing signal indicates a negative half cycle working zone, the voltage at the first input terminal of the switching circuit is higher than the voltage at the second input terminal of the switching circuit, the switch driving circuit turns on the third switching transistor and the fourth switching transistor, controls the first switching transistor performing switching action with a duty cycle, and controls the second switching transistor working at rectification state.

In one embodiment, when the synchronizing signal indicates a dead zone, the switch driving circuit controls at least two switching transistors among the first switching transistor, the second switching transistor, the third switching transistor and the fourth switching transistor to be in off state; and the switch driving circuit further controls one or two switching transistor among the first switching transistor, the second switching transistor, the third switching transistor and the fourth switching transistor to be in on state configured to provide a current loop for the load.

In one embodiment, during the dead zone, the switch driving circuit controls the first switching transistor and the third switching transistor to be in on state, and controls the second switching transistor and the fourth switching transistor to be in off state.

In one embodiment, during the dead zone, the switch driving circuit controls the second switching transistor and the fourth switching transistor to be in on state, and controls the first switching transistor and the third switching transistor to be in off state.

In one embodiment, the synchronizing signal generating circuit comprises: a differential amplifying circuit configured to generate an AC signal with reference to the reference terminal of the switching circuit based on the AC power source; a first comparing circuit having a first input terminal coupled with an output of the differential amplifying circuit, a second input terminal configured to receive a first threshold signal, and an output configured to provide a first synchronizing signal; and a second comparing circuit having a first input terminal coupled with the output of the differential amplifying circuit, a second input terminal configured to receive a second threshold signal, and an output configured to provide a second synchronizing signal.

In one embodiment, the synchronizing signal includes a first synchronizing signal and a second synchronizing signal, and wherein: when the AC power source is higher than a first threshold signal, the first synchronizing signal is in a first state and the second synchronizing signal is in a second state; when the AC power source is lower a second threshold signal, the first synchronizing signal is in the second state and the second synchronizing signal is in the first state; and when the AC power source is lower than the first threshold signal and higher than the second threshold signal, the first synchronizing signal and the second synchronizing signal are set in the first state or the second state simultaneously, and wherein the first threshold signal is a positive voltage signal and the second threshold signal is a negative voltage signal.

In one embodiment, the auxiliary power supplying circuit has an input, an output and a reference terminal, wherein the input of the auxiliary power supplying circuit is coupled with a first terminal of the switching circuit, the reference terminal of the auxiliary power supplying circuit is coupled with a second terminal of the switching circuit, the output of the auxiliary power supplying circuit supplies the switch driving circuit and wherein a current path forms between the second terminal and the first terminal of the switching circuit through at least a body diode of the switching circuit.

According to another aspect of the present application, a driving system for single-phase AC motor comprises the AC chopping circuit in either one of the above embodiments and a motor, wherein the AC chopping circuit is configured to drive the motor.

The AC chopping circuit and the single-phase AC motor driving system provided by the present application have simple structure, high efficiency and high power factor.

BRIEF DESCRIPTION OF THE DRAWINGS

FIG. 1 illustrates a block diagram of an AC chopping system according to an embodiment.

FIG. 2 illustrates a circuit diagram of an AC chopping system according to an embodiment of the present application.

FIG. 3 illustrates a schematic diagram of a synchronizing signal generating circuit according to an embodiment of the present application.

FIG. 4 illustrates a waveform diagram according to an embodiment of the present application.

FIG. 5 illustrates a schematic diagram of an auxiliary power supplying circuit according to an embodiment of the present application.

FIG. 6 shows a schematic diagram of an auxiliary power supplying circuit according to another embodiment of the present application.

FIG. 7 illustrates a schematic diagram of an auxiliary power supplying circuit according to yet another embodiment of the present application.

FIG. 8 illustrates a schematic diagram of an auxiliary power supplying circuit according to yet another embodiment of the present application.

DETAILED DESCRIPTION

In order to further understand the present application, the preferred embodiments of the application are described below in combination with the embodiments, but it should be understood that these descriptions are only for further explaining the features and advantages of the present application, rather than limiting the claims of the present application.

The description in this part is only for several typical embodiments, and the present application is not limited to the scope of the description of embodiments. The combination of different embodiments, some technical features in different embodiments, and the mutual replacement of the same or similar existing technical means and some technical features in the embodiments are also within the scope of the description and protection of the present application.

The term "couple" as used herein, is defined as either directly connecting, or indirectly connecting one to another via intermediary such as via an electrical conducting medium, e.g., a conductor, which may have a parasitic inductance or capacitance or the connection through an intermediate circuit or component described in the embodiments of the Description; Indirect connection can also include connection via other active or passive devices, e.g., circuit(s) or component(s) such as a switch or a follower circuit, or via signal amplifying circuit(s) or component(s) as would be known to a person skilled in the art, which can realize the same or similar function or purpose. "A and/or B" includes the situation of both having A and B, and the situation of having either A or B.

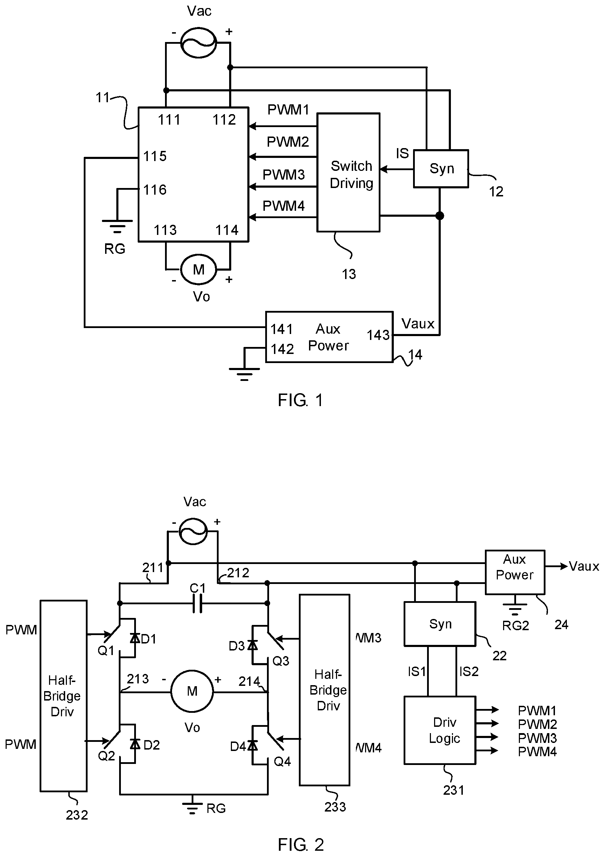

FIG. 1 illustrates a block diagram of a single-phase AC motor driving system according to an embodiment. The single-phase AC motor driving system comprises: an AC power source Vac, an AC chopping circuit and an AC load M, wherein the AC chopping circuit chops the AC power source Vac directly and provides an AC driving signal for driving the AC load M. Preferably, the AC load M comprises an AC motor M. The AC chopping circuit performs AC chopping function with no rectifying bridge, wherein the AC power source is supplied to bridge arms of switching circuit of the AC chopping circuit directly and is chopped alternatingly according to the polarity of the input AC power source Vac, and accordingly, a rectifying bridge is not required between the AC power source and the switching circuit, and thus additional conduction loss brought by the rectifying bridge is eliminated which helps integrating modules with higher power. The AC chopping circuit comprises a switching circuit 11, a synchronizing signal generating circuit 12, a switch driving circuit 13 and an auxiliary power supplying circuit 14. The inputs 111 and 112 of the switching circuit 11 are coupled to the AC power source Vac directly, and the outputs of the switching circuit 11 provide AC output voltage Vo based on the switching action of the switching circuit 11 for driving the motor M. The AC output voltage Vo is an AC chopping signal, and by controlling the duty cycle of the switching action of at least part of the switches in the switching circuit 11, the duty cycle of the output voltage Vo at outputs of the switching circuit 11 can be regulated, and the average value of the output voltage Vo can be regulated, and accordingly stepless speed control for the motor M can be achieved. This topology eliminates a rectifying bridge between the AC power source Vac and the switching circuit 11, simplifies the system, reduces the number of the discrete devices, and achieves small volume, high power efficiency and facilitates integrating module with higher power. The switching circuit 11 has a first input terminal 111, a second input terminal 112, a first output terminal 113 and a second output terminal 114, wherein the first input terminal 111 is coupled to a first terminal of the AC power source Vac, the second input terminal is coupled to a second terminal of the Ac power source Vac, the first output terminal 113 is coupled to a first terminal of motor M, and the second output terminal 114 is coupled to a second terminal of motor M. The synchronizing signal generating circuit 12 is coupled to the first terminal and the second terminal of the AC power source Vac, and provides at the output of the synchronizing signal generating circuit 12 a synchronizing signal IS which is related to the polarity of the AC power source Vac. In another embodiment, the synchronizing signal generating circuit may obtain signal representative of the polarity of the AC power source AC from other part of the system, for example, from the output of an EMI (Electro-Magnetic Interference) filter which is coupled to the AC power source Vac. Preferably, the AC power source Vac is mains power which is an AC sinusoidal signal having a frequency of 50Hz and an amplitude of 220Volts, or having a frequency of 60Hz and an amplitude of 110Volts, etc.. In one embodiment, the synchronizing signal IS is in a first state when the AC power source Vac is in its positive half cycle of the sinusoidal signal, or presents a positive half cycle working signal; and the synchronizing signal IS is in a second state when the AC power source Vac is in its negative half cycle of the sinusoidal signal, or presents a negative half cycle working signal, and wherein during the positive half cycle, the voltage at the first input terminal 111 is less than the voltage at the second input terminal 112, and during the negative half cycle, the voltage at the first input terminal 111 is higher than the voltage at the second input terminal 112 of the switching circuit 11, where the first state is different from the second state. Preferably, the synchronizing signal IS includes a positive half cycle working signal, a negative half cycle working signal, and a dead zone signal between the positive half cycle working signal and the negative half cycle working signal.

The switch driving circuit 13 generates switching control signals PWM1-PWM4 based on the synchronizing signal IS to control the switching circuit 11. The switch driving circuit 13 generates PWM (Pulse Width Modulation) signals having a second frequency for chopping at least part of the switches of the switching circuit 11, where the second frequency is higher than a first frequency of the AC power source Vac. Accordingly, at least part of the switches chop by performing switching action at the second frequency, and an AC chopping signal Vo is generated between the first output terminal 113 and the second output terminal 114 of the switching circuit 11, where the AC chopping signal Vo has an enveloping line which synchronizes with the AC power source Vac. By controlling the duty cycle of the PWM signals, the average voltage of the AC output signal Vo is regulated. The switch driving circuit 13 may generate the switching control signals PWM1-PWM4 further based on feedback signals such as current sensing signal, in order to control the duty cycle more accurately. In one embodiment, the second frequency is 10 times higher than the frequency of the AC power source Vac.

The auxiliary power supplying circuit 14 is coupled to the switching circuit 11, and generates an auxiliary power Vaux based on voltage signal(s) of the switching circuit 11, and provides auxiliary power Vaux for the switch driving circuit 13 and/or the synchronizing signal generating circuit 12. Preferably, the switching circuit 11 has a reference terminal RG which is coupled to the auxiliary power supplying circuit 14 and the switch driving circuit 13 and functions as ground of the auxiliary power supplying circuit 14 and the switch driving circuit 13. Via obtaining the voltage signal(s) of the switching circuit 11 and coupling to the reference terminal RG, the auxiliary power supplying circuit 14 forms a current loop together with the switching circuit 11 and provides power for the auxiliary power supplying circuit 14. Preferably, the reference terminal RG functions as system ground of the driving system, and achieves non-isolation system control, and further simplifies the system and cost. In one embodiment, the auxiliary power supplying circuit 14 has an input 141, a reference ground terminal 142 and an output 143, wherein the input 141 of the auxiliary power supplying circuit 14 is coupled to a first terminal 115 of the switching circuit 14, the reference ground terminal 142 of the auxiliary power supplying circuit 14 is coupled to a second terminal 116 of the switching circuit 11, and the output 143 of the auxiliary power supplying circuit 14 provides the auxiliary power Vaux for supplying the switch driving circuit 13 and/or the synchronizing signal generating circuit 12. Preferably, a current path is formed via at least one body diode of the switching circuit 11 from the second terminal 116 to the first terminal 115 of the switching circuit 11, or a switch of the switching circuit 11 is turned on to form the current path. And accordingly a current loop is formed among the switching circuit 11 and the auxiliary power supplying circuit 14, and the voltage(s) of the switching circuit supplies the auxiliary power supplying circuit 14 to form the auxiliary voltage Vaux. Thus, the auxiliary power supplying circuit 14 is provided without complex electrical isolation approach.

The above AC chopping circuit can achieve stepless regulation for motor by AC chopping function without rectifying bridge, and may have advantages of small volume, high efficiency and ease of integrating high power modules.

In one embodiment, the switching circuit 11 has a reference terminal RG coupled to the synchronizing signal generating circuit 12, the switch driving circuit 13 and the auxiliary power supplying circuit 14, and functioning as common ground of the synchronizing signal generating circuit 12, the switch driving circuit 13 and the auxiliary power supplying circuit 14 to make the system work.

Preferably, the AC chopping circuit is used to drive an AC motor such as a single-phase AC motor. Of course, the AC chopping circuit of the present application may be used to drive other types of load.

FIG. 2 illustrates a circuit diagram of an AC chopping system according to an embodiment of the present application. Wherein the switching circuit comprises a first switching transistor Q1, a second switching transistor Q2, a third switching transistor Q3 and a fourth switching transistor Q4. The first switching transistor Q1 is coupled between a first input terminal 211 and a first output terminal 213 of the switching circuit, the second switching transistor Q2 is coupled between the first output terminal 213 and a reference terminal RG, the third switching transistor Q3 is coupled between a second input terminal 212 and a second output terminal 214, and a fourth switching transistor Q4 is coupled between the second output terminal 214 and the reference terminal RG. Where each switching transistor has a parallel body diode. The first switching transistor Q1 has a first body diode D1 parallelly coupled with the first switching transistor Q1, wherein an anode of the first body diode D1 is coupled to the first output terminal 213 and a cathode of the first body diode D1 is coupled to the first input terminal 211. The second switching transistor Q2 has a second body diode D2 parallelly coupled, wherein an anode of the second body diode D2 is coupled to the reference terminal RG and a cathode of the second body diode D2 is coupled to the first output terminal 213. The third switching transistor Q3 has a third body diode D3 parallelly coupled, wherein an anode of the third body diode D3 is coupled to the second output terminal 214 and a cathode of the third body diode D3 is coupled to the second input terminal 212. And the fourth switching transistor Q4 has a fourth body diode D4 parallelly coupled, wherein an anode of the fourth body diode D4 is coupled to the reference terminal RG and a cathode of the fourth body diode D4 is coupled to the second output terminal 214. Switching transistors Q1-Q4 each may comprise a MOSFET (Metal Oxide Semiconductor Field Effect Transistor), a JFET (Junction Field Effect Transistor) or an IGBT (Insulated Gate Bipolar Transistor), etc. Preferably, each of the switching transistors Q1-Q4 comprises a MOSFET and has a parasitic body diode which works in non-synchronous rectification mode. In another embodiment, each of the switching transistors Q1-Q4 may has a switch module comprising several switching transistors coupled in parallel, or, comprising a switching transistor and a diode coupled in parallel with each other.

The synchronizing signal generating circuit 22 is coupled to a first terminal and a second terminal of an AC power source Vac, which is also coupled to the first input terminal 211 and the second input terminal 212 of the switching circuit, and provides synchronizing signals IS1 and IS2 at the outputs of the synchronizing signal generating circuit 22. Synchronizing signals IS1 and IS2 may also be generated based on a synchronizing signal IS as shown in FIG. 1.

The switch driving circuit generates switching control signals PWM1-PWM4 based on the first synchronizing signal IS1 and the second synchronizing signal IS2, in order to control the switching transistors Q1-Q4 in the switching circuit. As illustrated in FIG. 2, the switch driving circuit may comprise a driving logic circuit 231, a first half-bridge driving circuit 232 and a second half-bridge driving circuit 233. The first half-bridge driving circuit 232 and the second half-bridge driving circuit 233 amplify the logic signals generated by the driving logic circuit 231 and provide driving signals which are suitable for driving the switching transistors Q1-Q4.

The first half-bridge driving circuit 232 is coupled to the control terminals of the first switching transistor Q1 and the second switching transistor Q2 respectively for driving the first switching transistor Q1 and the second switching transistor Q2. The second half-bridge driving circuit 233 is coupled to the control terminals of the third switching transistor Q3 and the fourth switching transistor Q4 respectively for driving the third switching transistor Q3 and the fourth switching transistor Q4. To be different from the other half-bridge driving circuit which cannot turn on the two switches of a same bridge arm simultaneously, the first half-bridge driving circuit 232 selectively disables a first conduction interlock circuit in the first half-bridge driving circuit 232 to allow the first switching transistor Q1 and the second switching transistor Q2 in ON state simultaneously. And the second half-bridge driving circuit 233 selectively disables a second conduction interlock circuit in the second half-bridge driving circuit 233 and allows the third switching transistor Q3 and the fourth switching transistor Q4 in ON state simultaneously. To be different from other AC-AC chopping circuit, by selecting a reference terminal RG of the switching circuit and functioning as the reference ground of the switch driving circuit, the synchronizing signal generating circuit 22 and the auxiliary power supplying circuit 24, the first half-bridge driving circuit 232 and the second half-bridge driving circuit 233 of this embodiment can adopt non-isolated driving circuit without the use of isolation devices such as transformers. Thus, the system complexity, volume and cost are further reduced. Specifically, the first half-bridge driving circuit 232 can be used to turn on the first switching transistor Q1 and the second switching transistor Q2 simultaneously during the positive half cycle working zone, and the second half-bridge driving circuit 233 can be used to turn on the third switching transistor Q3 and the fourth switching transistor Q4 simultaneously during the negative half cycle working zone. The auxiliary power supplying circuit 24 is coupled to the first input terminal 211 and/or the second input terminal 212 of the switching circuit to provide an auxiliary power Vaux for the switch driving circuit and/or the synchronizing signal generating circuit 22. The auxiliary power supplying circuit 24 has a reference terminal RG2, which functions as the reference ground of the auxiliary power supplying circuit 24 and is coupled to the reference ground RG of the switching circuit. In one embodiment, the auxiliary power supplying circuit 24 has a first input terminal, a second input terminal, an output and a reference terminal RG2, wherein the first input terminal and the second input terminal of the auxiliary power supplying circuit 24 are respectively coupled to the first input terminal 211 and the second input terminal 212 of the switching circuit or coupled to the first output terminal 213 and the second output terminal 214 of the switching circuit. The output of the auxiliary power supplying circuit 24 is coupled to the switch driving circuit for supplying power for the switch driving circuit, and the reference terminal RG2 of the auxiliary power supplying circuit 24 is coupled to the reference terminal RG of the switching circuit to form a current loop between the auxiliary power supplying circuit 24 and the switching circuit. The switching circuit or AC power source Vac can charge a capacitor in the auxiliary power supplying circuit 24 both in the positive half cycle and the negative half cycle of the AC power source Vac. In one embodiment, the auxiliary power supplying circuit has only one input coupled to the switching circuit, for example, the input of the auxiliary power supplying circuit is coupled to any one of the first input terminal 211, the second input terminal 212, the first output terminal 213 and the second output terminal 214 of the switching circuit, and the switching circuit or AC power source charges the capacitor of the auxiliary power supplying circuit 24 only in the positive half cycle or only in the negative half cycle of the AC power source Vac.

In the embodiment as shown in Fig. 2, the AC chopping circuit further comprises a first capacitor C1, which is coupled between the first input terminal 211 and the second input terminal 212 of the switching circuit. The first capacitor C1 can be used to absorb high frequency harmonic waveforms. In one embodiment, the AC chopping circuit further includes an EMI filter, which is coupled between the first terminal and the second terminal of the AC power source Vac. The first capacitor C1 and the capacitor required by the EMI filter can be shared in common, thus no discrete capacitor C1 is required and thus to reduce the number of components and volume of the system. In another embodiment, the AC chopping circuit comprises two capacitors, which are respectively connected in parallel with the two bridge arms of the switching circuit, that is, a first terminal of the first capacitor is coupled to the first input terminal 211 of the switching circuit and a second terminal of the first capacitor is coupled to the reference terminal RG of the switching circuit, and a first terminal of the second capacitor is coupled to the second input terminal 212 of the switching circuit and a second terminal of the second capacitor is coupled to the reference terminal RG of the switching circuit.

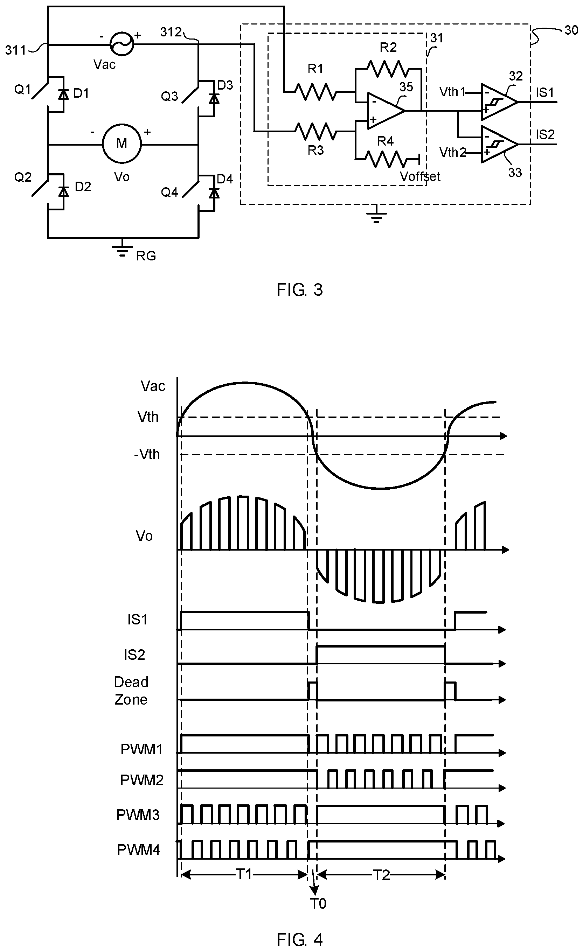

FIG. 3 illustrates a schematic diagram of a synchronizing signal generating circuit 30 according to an embodiment of the present application. In order to ensure mode switching among different working zones, it is necessary to obtain a signal indicative of the status of the AC power source Vac. The synchronizing signal generating circuit 30 has two inputs, a reference terminal and two outputs, wherein the two inputs are coupled to the two outputs of the AC power source Vac respectively, and the two outputs provide a first synchronizing signal IS1 and a second synchronizing signal IS2 respectively. In the illustrated embodiment, the synchronizing signal generation circuit 30 comprises a differential amplifying circuit 31, a first comparing circuit 32 and a second comparing circuit 33. The first terminal and the second terminal of the AC power source Vac are floating ports. With the operation of the differential amplifying circuit 31, the influence of the common mode signal of the AC power source is eliminated, and an offset AC signal relative to the reference terminal RG of the switching circuit and synchronizing with the input AC power source Vac is obtained, so as to facilitate the subsequent processing. In the illustrated embodiment, the differential amplifying circuit 31 has a first input terminal, a second input terminal, a bias terminal and an output, wherein the first input terminal of the differential amplifying circuit 31 is coupled to the first input terminal 311 of the switching circuit, the second input terminal of the differential amplifying circuit 31 is coupled to the second input terminal 312 of the switching circuit, the bias terminal of the differential amplifying circuit 31 receives a bias voltage Voffset based on the reference terminal RG of the switching circuit, and the output of the differential amplifying circuit 31 provides the bias AC signal. In the shown embodiment, the differential amplifying circuit 31 comprises resistors R1-R4 and an operational amplifier 35, wherein the resistor R1 is coupled between the first input terminal of the differential amplifying circuit 31 and the first input terminal of the operational amplifier 35, the resistor R2 is coupled between the first input terminal of the operational amplifier 35 and the output of the operational amplifier 35, the resistance R3 is coupled between the second input terminal of the differential amplifying circuit 31 and the second input terminal of the operational amplifier 35, and the resistance R4 is coupled between the second input terminal of the operational amplifier 35 and the bias voltage Voffset. The output of the operational amplifier 35 provides a bias AC signal. When setting R1 = R3 and R2 = R4, the value of the bias AC signal is:

$$(V_{acp} - V_{acn})\frac{R_2}{R_1} + V_{offset}$$

Where Vacp is the voltage at the second terminal of the AC power source, and Vacn is the voltage at the first terminal of the AC power source.

The non-inverting input of the first comparing circuit 32 is coupled to the output of the differential amplifying circuit 31, the inverting input of the first comparing circuit 32 is coupled to a first threshold signal Vth1, and the output of the first comparing circuit 32 provides the first synchronizing signal IS1. The inverting input of the second comparing circuit 33 is coupled to the output of the differential amplifying circuit 31, the non-inverting input of the second comparing circuit 33 is coupled to a second threshold signal Vth2, and the output of the second comparing circuit 33 provides a second synchronizing signal IS2. The first threshold signal Vth1 and the second threshold signal Vth2 can be voltage signals with reference to the reference terminal RG of the switching circuit as the reference ground.

The resistors R1-R4 can be replaced by other serial or parallel parasitic resistance.

Table 1 illustrates a status table of the first synchronizing signal IS1 and the second synchronizing signal IS2, with reference to the working status according to an embodiment of the present application.

Table 1

| IS1 | IS2 | Working Zone |
| --- | --- | --- |
| 0 | 0 | Dead zone |
| 1 | 0 | Positive half cycle |
| 0 | 1 | Negative half cycle |

(continued)

| IS1 | IS2 | Working Zone |
|-----|-----|--------------|
| 1 | 1 | Fault |

When the AC power source Vac is in the positive half cycle of the sine waveform, the voltage at the second input terminal 312 of the switching circuit is greater than the voltage at the first input terminal 311. When the AC power source Vac is greater than the first threshold signal Vth1, the first synchronizing signal IS1 is in the first state (such as high level state, or value "1"), and the second synchronizing signal IS2 is in the second state (such as low level state, or value "0"). Set this state as the positive half cycle working zone. When the AC power source Vac is in the negative half cycle of the sine wave, when the AC power supply voltage is less than the second threshold signal Vth2, the first threshold signal is a positive voltage signal, the second threshold signal is a negative voltage signal, the first synchronizing signal IS1 is in the second state ("0" value), and the second synchronizing signal IS2 is in the first state ("1" value). Set this state as the negative half cycle working zone. When the AC power source Vac is between the positive half cycle and the negative half cycle, such as when the AC power supply voltage is less than the first threshold signal Vth1 and greater than the second threshold signal Vth2, the first synchronizing signal IS1 and the second synchronizing signal IS2 are set to the second state ("0" value), and the state is set as the dead zone. When AC power source Vac has failure, set the first synchronizing signal IS1 and the second synchronizing signal to the first state ("1" value) at the same time. Of course, IS1 and IS2 can also be set to the first state ("1" value) when the AC power supply is in the dead zone between the positive half cycle and the negative half cycle, and the first synchronizing signal IS1 and the second synchronizing signal can be set to the second state ("0" value) when the AC power source Vac fails. In one embodiment, Vth1 =- Vth2.

FIG. 4 illustrates a waveform diagram according to an embodiment of the present application. The function of the AC chopping circuit will be described in combination with FIG. 2 and FIG. 3. The signals shown in FIG. 4 from top to bottom are the AC power source Vac, the AC chopping output voltage Vo, the first synchronizing signal IS1, the second synchronizing signal IS2, a dead zone signal and signals PWM-PWM4 representing the switching states of the four switches or the states of their switching control signals respectively. According to the polarity of the input AC power source Vac, the AC chopping scheme is divided into three working zones, namely the positive half cycle working zone T1, the negative half cycle working zone T2 and the dead zone T0. The working zones can be indicated by the first synchronizing signal IS1 and the second synchronizing signal IS2. In one embodiment, the working period when the input voltage Vac is higher than the first comparing threshold Vth is defined as the positive half cycle working zone T1, the working period when the input voltage Vac is lower than the first comparing threshold Vth and higher than the second comparing threshold -Vth is defined as the dead zone T0, and the working period when the input voltage is lower than the second comparing threshold -Vth is defined as the negative half cycle working zone T2.

In the positive half cycle working zone T1, the AC power source is in the positive half cycle (Vac>0), and the voltage at the first input terminal 211 of the switching circuit is less than the voltage at the second input terminal 212 of the switching circuit. At this time, signals PWM1 and PWM2 are in high level, signal PWM3 is a PWM signal with a second frequency, and signal PWM4 is a PWM signal complementary to signal PWM3, wherein the second frequency is greater than the first frequency of the AC power source Vac. The switch driving circuit controls that the first bridge arm comprising the first switching transistor Q1 and the second switching transistor Q2 are turned on, the second bridge arm are chopped in complementary pattern such that the third switching transistor Q3 performs switching action with a duty cycle under the control of the PWM signal, and the fourth switching transistor Q4 works in a rectification state which is complementary to the switching action of the third switching transistor Q3, that is, when the third switching transistor Q3 is turned on, the fourth switching transistor Q4 is turned off and when the third switch Q3 is off, the fourth switching transistor Q4 is on. In one embodiment, the control signal at the control terminal of the fourth switch Q4 is at a low value, and the fourth switch Q4 conducts through its body diode, so that the fourth switch Q4 works in non-synchronous rectification state. In another embodiment, the control signal at the control terminal of the fourth switch Q4 is a PWM control signal which is complementary to the signal at the control terminal of the third switch Q3, so that the fourth switch Q4 works in synchronous rectification state.

In the negative half cycle working zone T2, the AC power source Vac is in the negative half cycle (Vac<0), and the voltage at the first input terminal 211 of the switching circuit is greater than the voltage at the second input terminal 212 of the switching circuit. At this time, the control signals PWM3 and PWM4 are in high level, the PWM1 signal is a PWM signal with the second frequency, and the PWM2 signal is a PWM signal complementary to the PWM1 signal. The switch driving circuit turns on the second bridge arm including the third switching transistor Q3 and the fourth switching transistor Q4. Under the control of the PWM signal, the first switch Q1 of the first bridge arm switches with a duty cycle, and the second switch Q2 works in the rectification state, which is complementary to the switching action of the first switch Q1.

Via the above control, the voltage difference between the first output terminal 213 and the second output terminal 214 of the switching circuit, that is, the output voltage Vo of the switching circuit is presented as an AC chopping signal, which has the second frequency and the duty cycle corresponding to the PWM signal controlling the third switch Q3 or the first switch Q1, and the shape of the envelope line of the AC chopping signal Vo follows the waveform shape of the AC power source Vac. Accordingly, at the outputs of the switching circuit, a voltage signal having an envelope line the same as the input voltage waveform and having an average amplitude proportional to the duty cycle is applied to the load M. Therefore, by this control, the output voltage Vo can be adjusted by changing the duty cycle of the PWM signals, so that the motor can realize stepless speed regulation. At the same time, because the envelope line of the output voltage Vo corresponds to the shape of the AC power source, the system has a high power factor.

The dead zone T0 is set during when the AC power source Vac is in its switching state, that is, in the period between the positive half cycle working zone T1 and the negative half cycle working zone T2. At dead zone T0, at least two switches in the switching transistors Q1-Q4 are turned off, but at the meantime the switching transistors Q1-Q4 cannot be turned off at the same time, otherwise the inductive load will induce high-voltage which may breakdown the switching transistors, and moreover, the current waveform may be easily distorted, which will affect the Total Harmonic Distortion (THD). Therefore, it is necessary to provide appropriate driving signals for forming a current loop for the inductive load. The switch driving circuit controls one or two switches in the first switch Q1, the second switch Q2, the third switch Q3 and the fourth switch Q4 to be on. In the embodiment as shown in the figure, during the dead zone T0, the switch driving circuit controls the second switching transistor Q2 and the fourth switching transistor Q4 to turn on, the first switching transistor Q1 and the third switching transistor Q3 to turn off, and a current loop is formed through the load M and the reference terminal RG.

In another embodiment, during the dead zone T0, the switch driving circuit controls the first switching transistor Q1 and the second switching transistor Q2 to turn on and the third switching transistor Q3 and the fourth switching transistor Q4 to turn off, or the third switching transistor Q3 and the fourth switching transistor Q4 to turn on and the first switching transistor Q1 and the second switching transistor Q2 to turn off. The output of the bridge arm in on state is clamped at the electrical potential of the reference terminal RG of the switching circuit, and the two switches of the other bridge arm are turned off. The residual current of the inductive load will force the body diode of one of the switching transistors of the bridge arm in off state to turn on, forming a freewheeling circuit to allow forming a current loop.

In yet another embodiment, during the dead zone T0, the switch driving circuit controls the first switch Q1 and the third switch Q3 to turn on, the second switch Q2 and the fourth switch Q4 to turn off, and a freewheeling circuit is formed between the AC power source Vac and the load M.

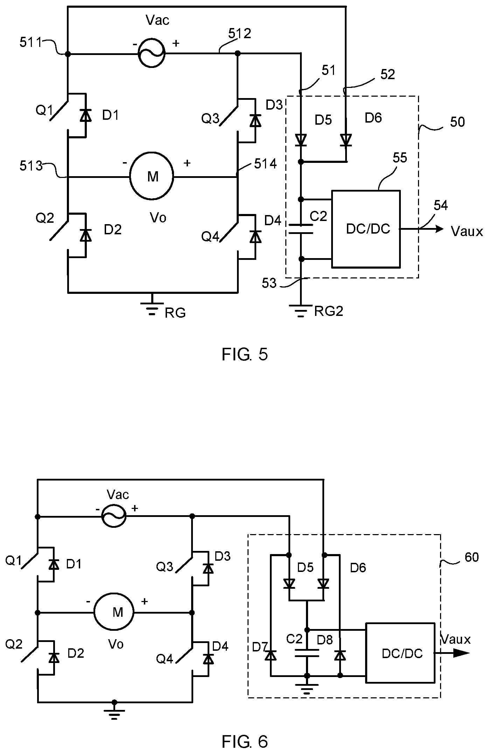

FIG. 5 illustrates a schematic diagram of an auxiliary power supplying circuit 50 according to an embodiment of the present application. The auxiliary power supplying circuit 50 has a first input terminal 51, a second input terminal 52, a reference terminal 53 and an output 54, wherein the first input terminal 51 and the second input terminal 52 of the auxiliary power supplying circuit 50 are coupled to the first input terminal 511 and the second input terminal 512 of the switching circuit respectively, and the output 54 of the auxiliary power supplying circuit 50 provides an auxiliary power Vaux for supplying power to the switch driving circuit and the synchronizing signal generating circuit. The reference terminal RG2 of the auxiliary power supplying circuit 50 is coupled to the reference terminal RG of the switching circuit to form a current loop between the first input terminal 51 of the auxiliary power supplying circuit 50, the reference terminal RG2 of the auxiliary power supplying circuit, the switching circuit and the AC power source Vac. The auxiliary power supplying circuit 50 comprises: a fifth diode D5, the anode of which is coupled to the second input terminal 512 of the switching circuit; a sixth diode D6, the anode of which is coupled to the first input terminal 511 of the switching circuit; a second capacitor C2, the first terminal of which is coupled to the cathode of the fifth diode D5 and the cathode of the sixth diode D6, and the second terminal of which is coupled to the reference terminal RG of the switching circuit through the reference terminal RG2; and a voltage converting circuit 55 having a first input terminal, a second input terminal and an output, wherein the first input terminal of the voltage converting circuit 55 is coupled to the cathode of the fifth diode d5 and/or the cathode of the sixth diode D6, the second input terminal of the voltage converting circuit 55 is coupled to the reference terminal RG of the switching circuit, and the output of the voltage converting circuit 55 provides an auxiliary power Vaux. The voltage converting circuit 55 may comprise a linear LDO (Low Drop Out circuit) or a DC-DC (Direct Current to Direct Current) switching mode voltage converting circuit, such as a voltage decreasing circuit (Buck), a voltage increasing circuit (Boost) or a voltage decreasing-increasing circuit (Buck-Boost).

As shown in the figure, when the AC power source Vac is in the positive half cycle, the input AC power source supplies power at the input of the DC/DC converting circuit 55 through the fifth diode D5 of the auxiliary power supplying circuit 50, the common reference terminal RG2, and the switches Q2 and Q1 in the switching circuit. When the AC power source Vac is in the negative half cycle, it forms a current loop through the sixth diode D6 of the auxiliary power supplying circuit, the common reference terminal RG2, and the switches Q4 and Q3 of the switching circuit together with the AC power source Vac to supply power at the input of the DC/DC converting circuit 55. When the system is initially powered on, the body diodes D1, D2, D3, D4 in the four main switches and the diodes D5 and/or D6 of the auxiliary power supplying circuit form a rectifying bridge. In the positive half cycle, it forms a current loop to supply power at the input of the DC/DC converting circuit 55 through the fifth diode D5 of the auxiliary power supplying circuit 50, the common reference terminal RG2, the body diodes D2 and D1 together with the AC power source Vac. In the negative half cycle, the AC power source Vac supplies power to the DC/DC converting circuit of the auxiliary power supplying circuit through the sixth diode D6 of the auxiliary power supplying circuit, the common reference terminal RG2, and the body diodes D4 and D3 of the switching circuit.

Moreover, by coupling the reference ground RG2 of the auxiliary power supplying circuit to the reference terminal RG of the switching circuit, when all the switches in the switching circuit are turned off, the current in the inductive load M can still flow through the current loop formed by the body diodes of the switching circuit and the auxiliary power supplying circuit 50. For example, when the switches Q1-Q4 are all in off state, if the current in the inductive load M flows out of the second output terminal 514, a freewheeling circuit for forming current loop is formed which comprises the body diode D3, the body diode D5, the reference terminal RG2 and the body diode D2; and if the current in the inductive load flows out of the first output terminal terminal 513, a freewheeling circuit is formed which comprises the body diode D1, the body diode D6, the reference terminal RG2 and the body diode D4, so as to reduce the voltage spike and avoid damaging the switching circuit under the extreme condition of turning off all the switches of the switching circuit at the same time.

In another embodiment, the auxiliary power supplying circuit 50 may not include the sixth diode D6, and the auxiliary power supplying circuit 50 is only powered by the AC power source Vac in the positive half cycles of the AC power source Vac.

In another embodiment, the auxiliary power supplying circuit may not include the second capacitance C2, and the AC power source directly supplies power to DC/DC converting circuit 55 for further generating auxiliary power Vaux. In one embodiment, the second capacitance C2 is part of the voltage converting circuit 55, or the second capacitance C2 is replaced by other forms of energy storage devices.

FIG. 6 shows a schematic diagram of an auxiliary power supplying circuit 60 according to another embodiment of the present application. Compared with the auxiliary power supplying circuit 50 in FIG. 5, the auxiliary power supplying circuit 60 further comprises a bypass device: a seventh diode D7, the anode of which is coupled to the second input terminal of the voltage converting circuit, wherein the first input terminal of the voltage converting circuit is coupled to the cathode of the diode D5 or D6, and the cathode of D7 is coupled to the anode of the fifth diode D5. The auxiliary power supplying circuit 60 may further include a bypass device: an eighth diode D8, the anode of which is coupled to the second input terminal of the voltage converting circuit, and the cathode of which is coupled to the anode of the sixth diode D6. In one embodiment, the auxiliary power supplying circuit comprises diodes D5 and D8, and has neither diode D6 nor D7. In one embodiment, the auxiliary power supplying circuit comprises diodes D6 and D7, but has neither D5 nor D8. In one embodiment, the auxiliary power supplying circuit comprises diodes D5, D6, D7 and D8 at the same time. In these embodiments, it can form a current loop without coupling the reference ground terminal of the auxiliary power supplying circuit to the switching circuit. For example, in the positive half cycle of the AC power source, a current loop is formed through diode D5, capacitor C2 and diode D8; in the negative half cycle of AC power source, the current loop is formed through diode D6, capacitor C2 and diode D7. In the embodiment shown in FIG. 6, although four diodes D5-D8 are introduced into the auxiliary power supplying circuit 60, due to the low current required by the auxiliary power supplying circuit 60, compared with the rectifying bridge scheme coupled between the input AC power source Vac and the switching circuit, the power of the diodes in the auxiliary power supplying circuit is greatly reduced, and the requirements of the parameters of diodes D5-D8 are also reduced and having small size.

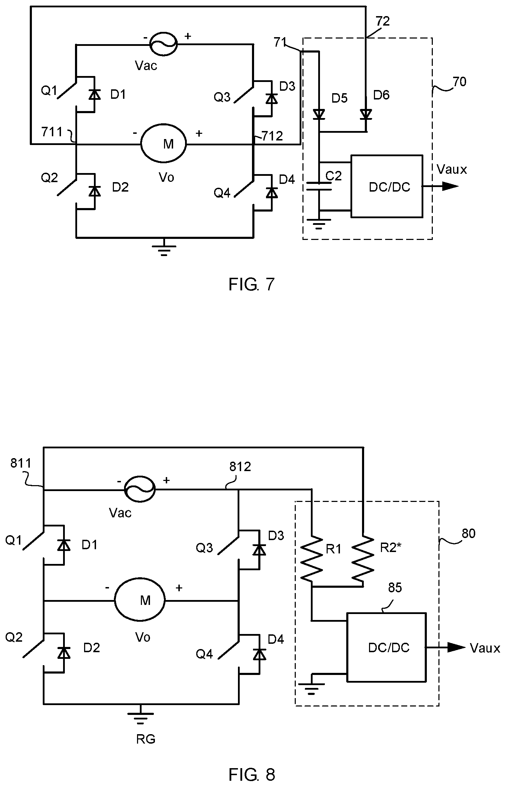

FIG. 7 illustrates a schematic diagram of an auxiliary power supplying circuit 70 according to another embodiment of the present application. Compared with the embodiment in FIG. 5, the first input terminal 71 and/or the second input terminal 72 of the auxiliary power supplying circuit 70 are coupled to the first output terminal 711 and/or the second output terminal 712 of the switching circuit respectively. The auxiliary power supplying circuit 70 obtains power from the output(s) of the switching circuit.

FIG. 8 illustrates a schematic diagram of an auxiliary power supplying circuit 80 according to yet another embodiment of the present application. The auxiliary power supplying circuit 80 comprises: a first resistance R1, a first terminal of which is coupled to the second input terminal 812 of the switching circuit, and/or, a second resistance R2, a first terminal of which is coupled to the first input terminal 811 of the switching circuit; and a voltage converting circuit 85 having a first input terminal, a second input terminal and an output, wherein the first input terminal of the voltage converting circuit 85 is coupled to a second terminal of the first resistor R1 and/or a second terminal of the second resistor R2, the second input terminal of the voltage converting circuit 85 is coupled to the reference terminal RG of the switching circuit, and the output of the voltage converting circuit 85 provides the auxiliary power Vaux.

By coupling the reference ground of the auxiliary power supplying circuit to the reference terminal RG of the power supply circuit, the power can be obtained from the input(s) or output(s) of the switching circuit. By using the body diodes of the switches in the switching circuit, a current loop is formed for the auxiliary power supplying circuit, which simplifies the design and cost of the auxiliary power supplying circuit.

It should be known to those skilled in the art that the logic controls of "high level" and "low level", "non-inverting input" and "inverting input" in the above logic controls can be exchanged or changed with each other, and the same function or purpose as the above embodiment can be achieved by adjusting the subsequent logic control.

Here, the description and application of the present application are illustrative, and it is not intended to limit the scope of the present application to the above embodiments. The effects or advantages and other related descriptions mentioned in the specification may not be reflected in the actual experimental examples due to the uncertainty of variable condition parameters or other factors not mentioned. The effects or advantages and other related descriptions are not used to limit the scope of the present application. It is possible to modify the embodiments disclosed herein, and the replacement and equivalent components of the embodiments are well known to those skilled in the art. It should be clear to those skilled in the art that the present application can be realized in other forms, structures, arrangements, proportions and with other components, materials and components without departing from the spirit or essential features of the present application. Other modifications and changes can be made to the embodiments disclosed herein without departing from the scope and spirit of the present application.

**Claims**

1. An AC (alternating current) chopping circuit, comprising:

   a switching circuit, having a first input terminal, a second input terminal, a first output terminal and a second output terminal, wherein the first input terminal is coupled with a first terminal of an AC power source, the second input terminal is coupled with a second terminal of the AC power source, the first output terminal is coupled with a first terminal of a load, and the second output terminal is coupled with a second terminal of the load;
   a synchronizing signal generating circuit, configured to provide a synchronizing signal which is related to polarity of the AC power source;
   a switch driving circuit, configured to control the switching circuit in accordance with the synchronizing signal; and
   an auxiliary power supplying circuit, coupled with the switching circuit, the auxiliary power supplying circuit generating an auxiliary power to supply the switch driving circuit based on voltage signal in the switching circuit.

2. The AC chopping circuit of claim 1, wherein the switching circuit has a reference terminal coupled with the auxiliary power supplying circuit and the switch driving circuit, and the reference terminal functions as ground of the auxiliary power supplying circuit and ground of the switch driving circuit.

3. The AC chopping circuit of claim 1, further comprising a first capacitor coupled between the first input terminal and the second input terminal of the switching circuit.

4. The AC chopping circuit of claim 1, wherein the switching circuit comprising:

   a first switching transistor, coupled between the first input terminal and the first output terminal of the switching circuit;
   a second switching transistor, coupled between a reference terminal and the first output terminal of the switching circuit;
   a third switching transistor, coupled between the second input terminal and the second output terminal of the switching circuit; and
   a fourth switching transistor, coupled between the reference terminal and the second output terminal of the switching circuit.

5. The AC chopping circuit of claim 4, wherein the switch driving circuit comprises:

   a first half-bridge driving circuit, configured to drive the first switching transistor and the second switching transistor, wherein the first half-bridge driving circuit is capable of turning on the first switching transistor and the second switching transistor simultaneously; and
   a second half-bridge driving circuit, configured to drive the third switching transistor and the fourth switching transistor, wherein the second half-bridge driving circuit is capable of turning on the third switching transistor and the fourth switching transistor simultaneously, and wherein the first half-bridge driving circuit and the second half-bridge driving circuit are non-isolated driving circuit.

6. The AC chopping circuit of claim 4, wherein:

   the first switching transistor has a first body diode coupled in parallel with the first switching transistor, and wherein anode of the first body diode is coupled with the first output terminal of the switching circuit, and cathode of the first body diode is coupled with the first input terminal of the switching circuit;
   the second switching transistor has a second body diode coupled in parallel with the second switching transistor, and wherein anode of the second body diode is coupled with the reference terminal of the switching circuit, and cathode of the second body diode is coupled with the first output terminal of the switching circuit; the third switching transistor comprises a third body diode coupled in parallel with the third switching transistor, and wherein anode of the third body diode is coupled with the second output terminal of the switching circuit, and cathode of the third body diode is coupled with the second input terminal of the switching circuit; and the fourth switching transistor comprises a fourth body diode coupled in parallel with the fourth switching transistor, and wherein anode of the fourth body diode is coupled with the reference terminal of the switching circuit, and cathode of the fourth body diode is coupled with the second output terminal of the switching circuit.

7. The AC chopping circuit of claim 4, wherein the auxiliary power supplying circuit has an input terminal, an output terminal and a reference terminal, and wherein the input terminal of the auxiliary power supplying circuit is coupled with either one of the first input terminal, the second input terminal, the first output terminal or the second output terminal of the switching circuit, the output terminal of the auxiliary power supplying circuit is coupled with the switch driving circuit configured to provide power to the switch driving circuit and the synchronizing signal generating circuit, the reference terminal of the auxiliary power supplying circuit is coupled with the reference terminal of the switching circuit configured to form a current loop among the input terminal of the auxiliary power supplying circuit, the reference terminal of the auxiliary power supplying circuit and the switching circuit.

8. The AC chopping circuit of claim 4, wherein the auxiliary power supplying circuit comprises:

a fifth diode, having an anode coupled with the first input terminal of the switching circuit, and/or a sixth diode, having an anode coupled with the second input terminal of the switching circuit; and a voltage converting circuit, having a first input terminal, a second input terminal and an output terminal, wherein the first input terminal of the voltage converting circuit is coupled with a cathode of the fifth diode and/or with a cathode of the sixth diode, the second input terminal of the voltage converting circuit is coupled with the reference terminal of the switching circuit, and the output terminal of the auxiliary power supplying circuit is configured to provide the auxiliary power.

9. The AC chopping circuit of claim 4, wherein the auxiliary power supplying circuit comprises:

a fifth diode, having an anode coupled with the first output terminal of the switching circuit, and/or a sixth diode, having an anode coupled with the second output terminal of the switching circuit; and a voltage converting circuit, having a first input terminal, a second input terminal and an output terminal, wherein the first input terminal of the voltage converting circuit is coupled with a cathode of the fifth diode and/or with a cathode of the sixth diode, the second input terminal of the voltage converting circuit is coupled with the reference terminal of the switching circuit, and the output terminal of the auxiliary power supplying circuit is configured to provide the auxiliary power.

10. The AC chopping circuit of claim 8 or 9, wherein the auxiliary power supplying circuit further comprises:

a seventh diode, having an anode coupled with the second input terminal of the voltage converting circuit, and a cathode coupled with the anode of the fifth diode; and/or an eighth diode, having an anode coupled with the second input terminal of the voltage converting circuit, and a cathode coupled with the anode of the sixth diode.

11. The AC chopping circuit of claim 8 or 9, wherein the auxiliary power supplying circuit further comprises a second capacitor coupled between the first input terminal and the second input terminal of the voltage converting circuit.

12. The AC chopping circuit of claim 4, wherein the auxiliary power supplying circuit comprises:

a first resistor, having a first terminal coupled with the first input terminal of the switching circuit; a second resistor, having a first terminal coupled with the second input terminal of the switching circuit, and a second terminal coupled with a second terminal of the first resistor; and a voltage converting circuit, having a first input terminal, a second input terminal and an output terminal, wherein the first input terminal of the voltage converting circuit is coupled with the second terminal of the first resistor, the second input terminal of the voltage converting circuit is coupled with the reference terminal of the auxiliary power supplying circuit, and the output terminal of the voltage converting circuit is configured to provide the auxiliary power.

13. The AC chopping circuit of claim 4, wherein:

when the synchronizing signal indicates a positive half cycle working zone, the voltage at the first input terminal of the switching circuit is less than the voltage at the second input terminal of the switching circuit, the switch driving circuit turns on the first switching transistor and the second switching transistor, controls the third switching transistor performing switching action with a duty cycle, and controls the fourth switching transistor working at rectification state; and when the synchronizing signal indicates a negative half cycle working zone, the voltage at the first input terminal of the switching circuit is higher than the voltage at the second input terminal of the switching circuit, the switch driving circuit turns on the third switching transistor and the fourth switching transistor, controls the first switching transistor performing switching action with a duty cycle, and controls the second switching transistor working at rectification state.

14. The AC chopping circuit of claim 13, wherein when the synchronizing signal indicates a dead zone, the switch driving circuit controls at least two switching transistors among the first switching transistor, the second switching transistor, the third switching transistor and the fourth switching transistor to be in off state; and the switch driving circuit further controls one or two switching transistor among the first switching transistor, the second switching transistor, the third switching transistor and the fourth switching transistor to be in on state configured to provide a current loop for the load.

15. The AC chopping circuit of claim 14, wherein during the dead zone, the switch driving circuit controls the first switching transistor and the third switching transistor to be in on state, and controls the second switching transistor and the fourth switching transistor to be in off state.

16. The AC chopping circuit of claim 14, wherein during the dead zone, the switch driving circuit controls the second switching transistor and the fourth switching transistor to be in on state, and controls the first switching transistor and the third switching transistor to be in off state.

17. The AC chopping circuit of claim 4, wherein the synchronizing signal generating circuit comprises:

a differential amplifying circuit, configured to generate an AC signal with reference to the reference terminal of the switching circuit based on the AC power source;
a first comparing circuit, having a first input terminal coupled with an output terminal of the differential amplifying circuit, a second input terminal configured to receive a first threshold signal, and an output terminal configured to provide a first synchronizing signal; and
a second comparing circuit having a first input terminal coupled with the output terminal of the differential amplifying circuit, a second input terminal configured to receive a second threshold signal, and an output terminal configured to provide a second synchronizing signal.

18. The AC chopping circuit of claim 1, wherein the synchronizing signal comprises a first synchronizing signal and a second synchronizing signal, and wherein:

when the AC power source is higher than a first threshold signal, the first synchronizing signal is in a first state and the second synchronizing signal is in a second state;
when the AC power source is lower a second threshold signal, the first synchronizing signal is in the second state and the second synchronizing signal is in the first state; and
when the AC power source is lower than the first threshold signal and higher than the second threshold signal, the first synchronizing signal and the second synchronizing signal are set in the first state or the second state simultaneously, and wherein the first threshold signal is a positive voltage signal and the second threshold signal is a negative voltage signal.

19. The AC chopping circuit of claim 1, wherein the auxiliary power supplying circuit has an input terminal, an output terminal and a reference terminal, wherein the input terminal of the auxiliary power supplying circuit is coupled with a first terminal of the switching circuit, the reference terminal of the auxiliary power supplying circuit is coupled with a second terminal of the switching circuit, the output terminal of the auxiliary power supplying circuit supplies the switch driving circuit and wherein a current path forms between the second terminal and the first terminal of the switching circuit through at least a body diode of the switching circuit.

20. A driving system for single-phase AC motor, comprising the AC chopping circuit in either one of claims 1-9 and 12-19 and a motor, wherein the AC chopping circuit is configured to drive the motor.

FIG. 1

FIG. 2

FIG. 3

FIG. 4

FIG. 5

FIG. 6

FIG. 7

FIG. 8

<table>
<tr><td colspan="2" style="text-align:center"><b>INTERNATIONAL SEARCH REPORT</b></td><td>International application No.<br><br><b>PCT/CN2020/113872</b></td></tr>
</table>

**A. CLASSIFICATION OF SUBJECT MATTER**

H02P 25/04(2006.01)i; H02P 25/16(2006.01)i; H02M 5/22(2006.01)i; H02M 5/293(2006.01)i

According to International Patent Classification (IPC) or to both national classification and IPC

**B. FIELDS SEARCHED**

Minimum documentation searched (classification system followed by classification symbols)

H02P; H02M

Documentation searched other than minimum documentation to the extent that such documents are included in the fields searched

Electronic data base consulted during the international search (name of data base and, where practicable, search terms used)

CNTXT; CNABS; CNKI; SIPOABS; DWPI; EPTXT; WOTXT; USTXT: 交流, 斩波, 开关, 电路, 同步, 驱动, 辅助, 电源, AC, chop, switch, circuit, synchron+, drive, auxiliary, power supply

**C. DOCUMENTS CONSIDERED TO BE RELEVANT**

| Category* | Citation of document, with indication, where appropriate, of the relevant passages | Relevant to claim No. |
|---|---|---|
| X | CN 101874346 A (KONINKL PHILIPS ELECTRONICS NV.) 27 October 2010 (2010-10-27) description, paragraphs [0024]-[0042], and figures 1-4 | 1-20 |
| A | CN 102377348 A (SHANGHAI WEIMAN ELECTRICAL TECHNOLOGY DEVELOPMENT CO., LTD.) 14 March 2012 (2012-03-14) entire document | 1-20 |
| A | CN 102324855 A (LIAONING ELECTRIC POWER COMPANY LIMITED et al.) 18 January 2012 (2012-01-18) entire document | 1-20 |
| A | CN 104796005 A (GONG, Qiusheng) 22 July 2015 (2015-07-22) entire document | 1-20 |
| A | JP 2011151950 A (MERSTECH INC.) 04 August 2011 (2011-08-04) entire document | 1-20 |

☐ Further documents are listed in the continuation of Box C.　　☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **15 March 2021** | **11 May 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2020/113872**

| Patent document cited in search report | | | Publication date (day/month/year) | Patent family member(s) | | | Publication date (day/month/year) |
|---|---|---|---|---|---|---|---|
| CN | 101874346 | A | 27 October 2010 | US | 8125179 | B2 | 28 February 2012 |
| | | | | EP | 2122304 | B1 | 14 November 2012 |
| | | | | US | 2010109598 | A1 | 06 May 2010 |
| | | | | CN | 101874346 | B | 29 May 2013 |
| | | | | WO | 2008110964 | A2 | 18 September 2008 |
| | | | | WO | 2008110964 | A3 | 12 May 2011 |
| | | | | JP | 2010530202 | A | 02 September 2010 |
| | | | | JP | 5632613 | B2 | 26 November 2014 |
| | | | | EP | 2122304 | A2 | 25 November 2009 |
| CN | 102377348 | A | 14 March 2012 | CN | 102377348 | B | 04 February 2015 |
| CN | 102324855 | A | 18 January 2012 | CN | 102324855 | B | 05 March 2014 |
| CN | 104796005 | A | 22 July 2015 | CN | 104796005 | B | 05 February 2019 |
| JP | 2011151950 | A | 04 August 2011 | WO | 2011090142 | A1 | 28 July 2011 |

Form PCT/ISA/210 (patent family annex) (January 2015)